# EUROPEAN PATENT APPLICATION

(11) **EP 2 463 773 A1**
(43) Date of publication of application: **13.06.2012**
(21) Application number: 11169670.4
(22) Date of filing: 13.06.2011
(51) Int. Cl.: G06F 9/44, G06F 3/048

(54) **Operating environments for mobile computing devices**

(30) Priority: 10.12.2010 US 928388; 22.03.2011 US 65524
(71) Applicant: Mitel Networks Corporation, Ottawa, ON K2K 2W7 (CA)
(72) Inventor: Tam, Terry, Ottawa, Ontario K1J 7V2 (CA)
(74) Representative: Venner Shipley LLP

(57) **Abstract**

A web based desktop environment is disclosed. The desktop environment comprises a work area configured to display application windows in a web browser operating on a mobile computing device. A resident application bar is displayed adjacent the work area and configured to display only icons for resident web applications. An application board resident application is configured to be selected on the resident application bar to display in the work area icons that are operable as shortcuts to launch web applications to be displayed in the work area. A task board resident application is configured to be selected on the resident application bar to display in the work area a web application icon for each launched web application to allow a display of the launched web applications to be managed.

## Description

A web desktop is a desktop environment that can be embedded in a web browser or similar client application. The web desktop can be used to integrate web applications, web services, client-server applications, application servers, and applications on a local client into a desktop environment using the desktop metaphor. A web desktop can be a virtual desktop running in a web browser. The applications, data, files, configuration, settings, and access privileges can reside remotely over the network. This allows much of the computing to take place remotely.

As the desktop metaphor has evolved over the years, the abilities of the desktop have advanced. Unfortunately, with the advances has come a certain amount of feature bloat. Superfluous and unnecessary features in many types of desktops can require excessive amounts of processor power and memory use. In addition, in a web desktop feature bloat can cause an undesirable amount of information to be communicated over a network. When a large number of computing devices connected to a network are using a web desktop, this excess communication can be a burden to the network.

Features and advantages of the invention will be apparent from the detailed description which follows, taken in conjunction with the accompanying drawings, which together illustrate, by way of example, features of the invention; and, wherein:
Figure 1 illustrates an example of a desktop environment embedded in a web browser in accordance with an embodiment of the present invention;
Figure 2 illustrates an example of a Power Bar resident desktop application operating in the desktop environment in accordance with an embodiment of the present invention;
Figure 3 illustrates an example of a web application launched in the Power Bar resident desktop application in accordance with an embodiment of the present invention;
Figure 4 illustrates an example of a task board operating in the Power Bar resident desktop application in accordance with an embodiment of the present invention;
Figure 5 illustrates an example of the task board operating in the Power Bar resident desktop application in an open mode in accordance with an embodiment of the present invention;
Figure 6a illustrates an example of the task board as a scrollable window showing a single row of application icons in accordance with an embodiment of the present invention;
Figure 6b illustrates an example of a task board resident desktop application having a scrollable window in accordance with an embodiment of the present invention;
Figure 7 illustrates an example of the Search Sage resident desktop application operating in the desktop environment in accordance with an embodiment of the present invention;
Figure 8 illustrates an example of the Search Sage resident desktop application with text input into a text box in accordance with an embodiment of the present invention;
Figure 9 illustrates an example of a web application launched in the Search Sage resident desktop application in accordance with an embodiment of the present invention;
Figure 10 illustrates an example of a web browser operating environment for a mobile computing device in accordance with an embodiment of the present invention;
Figure 11 illustrates an example of an application board resident desktop application displaying icons to launch web applications to operate in the operating environment on the mobile computing device in accordance with an embodiment of the present invention;
Figure 12 illustrates an example of a task board resident desktop application displaying an active icon for active web applications operating in the operating environment on the mobile computing device in accordance with an embodiment of the present invention;
Figure 13 illustrates an example of a web application operating in the operating environment on the mobile computing device in accordance with an embodiment of the present invention; and
Figure 14 is a flow chart depicting a method for operating web applications in a web browser operating environment on a mobile computing device in accordance with an embodiment of the present invention.

Reference will now be made to the exemplary embodiments illustrated, and specific language will be used herein to describe the same. It will nevertheless be understood that no limitation of the scope of the invention is thereby intended.

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result.

An initial overview of technology embodiments is provided below and then specific technology embodiments are described in further detail later. This initial summary is intended to aid readers in understanding the technology more quickly but is not intended to identify key features or essential features of the technology nor is it intended to limit the scope of the claimed subject matter. The following definitions are provided for clarity of the overview and embodiments described below.

A desktop environment embedded in a web browser or similar client application is commonly referred to as a web desktop. The web desktop can be a useful tool to integrate web applications, web services, client-server applications, application servers, and applications on a local client into a desktop environment using the desktop metaphor. A web desktop can be a virtual desktop running in a web browser.

The applications, data, files, configuration, settings, and access privileges can reside remotely over the network. This allows much of the computing to take place remotely. The use of a simplified web desktop can reduce the amount of information that is communicated over a network. In addition, a simplified web desktop can provide a larger work area to display desired applications and reduce the amount of training needed to operate the web desktop.

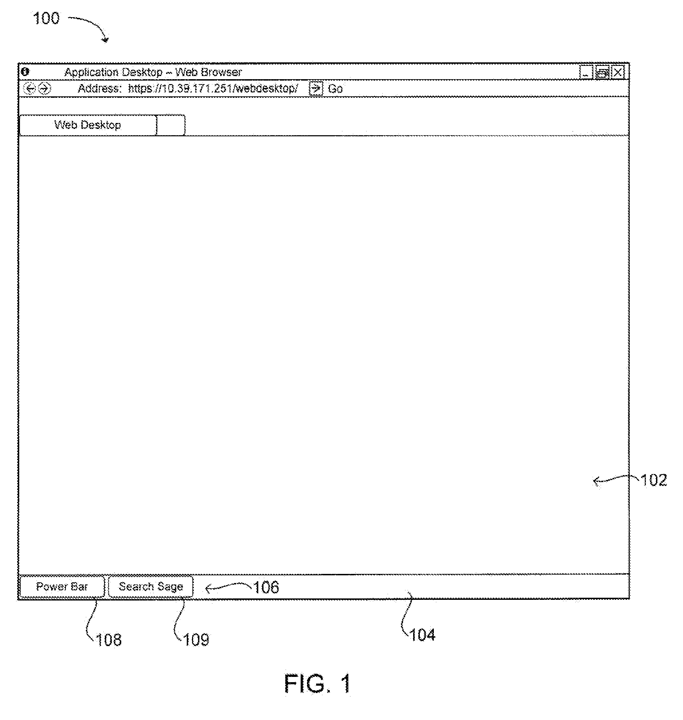

In accordance with one embodiment of the present invention, Figure 1 provides an example illustration of a desktop environment embedded in a web browser to form a web desktop 100. The web desktop is comprised of a work area 102 and a resident application bar 104. The work area can include a customizable background image, if desired.

In one embodiment, the resident application bar 104 is used only to display resident icons 106 for resident desktop applications that are configured to operate persistently with the web desktop 100. In other words, the resident desktop applications are launched at the same time as the desktop environment and can only be terminated when the web desktop is terminated.

Each resident icon 106 can be limited in functionality. While typical application icons can be used to accomplish functions such as maximizing, minimizing, moving, and resizing a window associated with an icon's application, the resident icons can be limited in functionality to the operations of maximizing or minimizing the resident desktop application. Thus, each resident desktop application can only be maximized or minimized, thereby enabling only a single resident desktop application to be viewed at any one time using the web desktop 100.

In another embodiment, the web desktop can be configured to enable multiple resident desktop applications to be maximized and viewed simultaneously in the work area 102. For instance, if two resident desktop applications are maximized, the user may be given the option to split the desktop and view both resident desktop applications. While the resident desktop of Figure 1 does not include scrollbars, it is possible to add horizontal or vertical scrollbars to increase the area in which the resident desktop application windows can be rendered.

One resident desktop application that can be launched with the web desktop 100 is the Power Bar resident desktop application 108. The Power Bar resident desktop application is a web application configured as an application launcher with active task management. Another resident desktop application that can be launched with the web desktop is the Search Sage resident desktop application 109. The search sage application enables a user to launch applications based on a search of available applications.

The resident icons 106 for the resident desktop applications 108, 110 can be displayed on the resident application bar 104 in any order. Each icon can act as a toggle switch, enabling the associated resident desktop application to be maximized or minimized by selecting the resident icon. In the present application, resident icons with no background represent a minimized application, while resident icons with a dotted background represent a maximized application. This is done for illustrative reasons only and is not intended to be limiting.

The Power Bar resident desktop application 108 is a web application launcher that enables a user to launch multiple web applications in individual windows within the web desktop 100 work area 102. A web application is a computer software application, such as a Java applet that can be hosted in a web browser or similar type of environment. A web application may be written in a language that is supported by a web browser. Popular client side languages include scripting languages such as JavaScript and VBScript. Server side languages, such as PERL and PHP, may also be used. The web application is typically reliant on a common web browser to render the application executable. Any type of common web browser that supports the web application language may be used.

The web applications can be stored on a server. The server may be a local server, a server on a local area network, or a server located in a cloud and accessible through an internet connection. The server may be a physical server, or a virtual server.

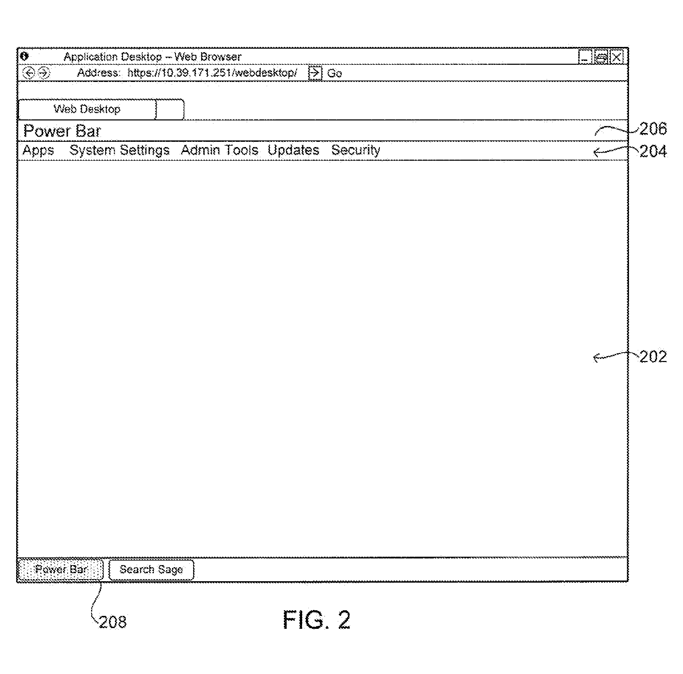

Figure 2 provides one example illustration of the Power Bar resident desktop application 208 operating in the web desktop. The window displaying the Power Bar resident desktop application is comprised of a work area 202, a menu bar 204, and a header 206. The menu selections illustrated on the menu bar in Figure 2 are provided for illustration only and are not intended to be limiting. The menu bar can be customized with menu items to operate the web applications desired by a customer.

In one embodiment, the menu bar 204 can be a standard pull down menu with sub-menuing capability. For instance, a user may select or mouse-over a desired item on a menu bar which can result in a sub-menu being displayed, enabling the user to select an item on the sub-menu. The menus and sub-menus can be used to enable the user to open desired web applications. Other graphical interfaces may be used to allow a user to select a desired application. For example, selectable applications may be organized using tabs, ribbons, or another graphical organization instrument.

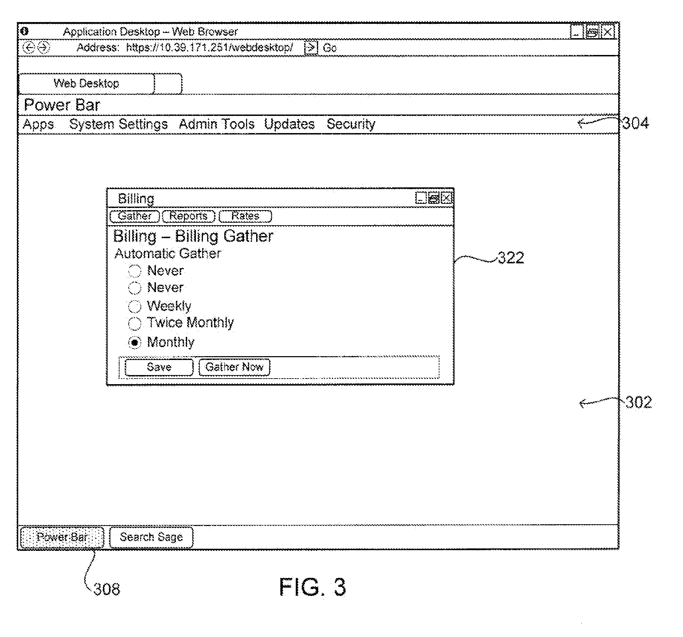

Figure 3 provides one example of a web application 322 that can be launched in the Power Bar resident desktop application 308 using a graphical user interface such as the menu bar 304. The window associated with the web application can be displayed in the work area 302 of the Power Bar resident desktop application. The Power Bar resident desktop application can be used to launch a plurality of different web applications. Each web application that is launched can display at least one window in the work area. The number of windows that can be displayed in the work area is limited only by the amount of memory and the graphical processing power of the computer server that the web desktop is operating on.

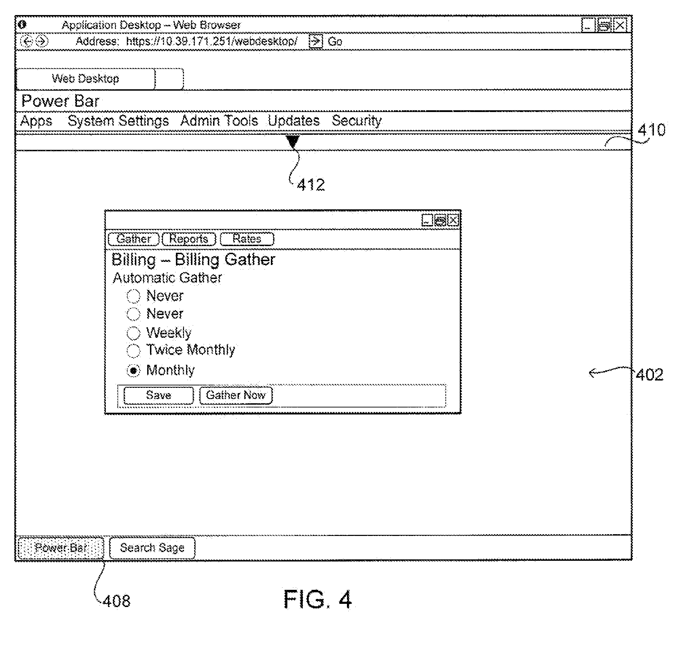

In one embodiment, the Power Bar resident desktop application 408 can further comprise a task board 410 that is configured to enable a user to select and control the display of each window launched using the Power Bar resident desktop application, as illustrated in the example of Figure 4. The task board is a scrollable two dimensional window that contains the application icon of every web application that is launched using the Power Bar resident desktop application. The task board can be located at a selected edge of the work area 402 and configured to display a web application icon for each web application that has been launched in the Power Bar resident desktop application 408. For instance, the task board may be located at the top of the work area 402. Alternatively, the task board may be located at the bottom, left side, or right side of the work area.

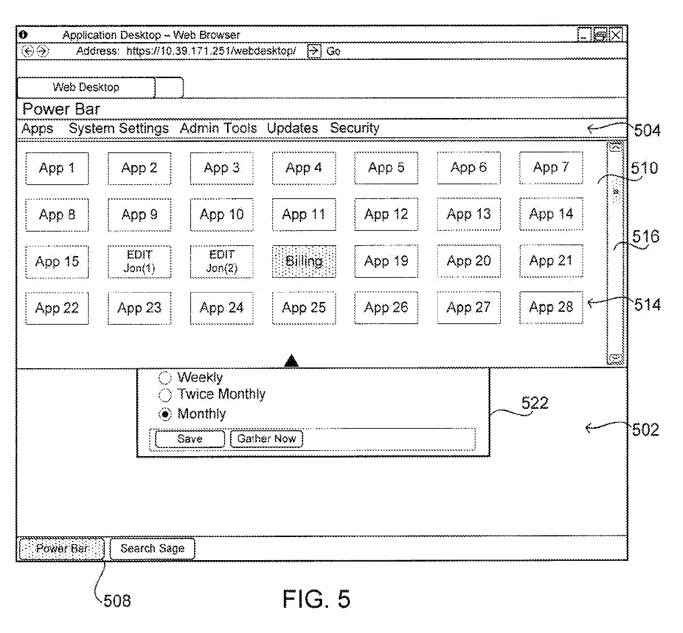

The task board 410 is a collapsible window that enables the work area 402 of the Power Bar resident desktop application 408 to be maximized for displaying graphical interfaces associated with launched web applications. Figure 4 displays an example of the task board in a closed position. An active region 412 on the task board can be activated using a mouse or other type of graphical selection device to display the task board in an opened position, as illustrated in Figure 5.

The task board 510 in the opened position can display a plurality of rows of application icons 514 associated with open web applications in the Power Bar resident desktop application 508. The icons can be named or numbered to allow a user to easily associate the application icon with its web application. The task board can be vertically resized by a user to display a desired number of rows of application icons. The work area 502 can be displayed below the task board. The work area may also be covered by the task board when the task board is in the opened position.

The display of a window in the work area 502 can be controlled using either controls on the window itself, or using the application icon 514 associated with the window. For instance, Figure 5 shows that the application icon associated with the "Billing" web application of Figure 3 is depressed, thereby displaying the window 522 for the Billing web application in the work area. The size of the window may be expanded or reduced by selecting a "resize" option using the application icon associated with the Billing web application. Alternatively, the creator of the web application may design the window to have a fixed size.

The application icon 514 can be used to perform a number of actions on its associated web application window, such as maximize, minimize, resize, move, and so forth. A user can select the desired action by selecting the application icon in the task board 510. For example, in one embodiment a desired action may be selected by right-clicking on the application icon. Other selecting means may be used as well, such as double clicking using a mouse, or tapping or double tapping using a touch screen. Additional selecting means may also be used, as can be appreciated.

The task board 510 can include a vertical scrollbar 516. The vertical scrollbar allows an unlimited number of application icons 514 to be displayed within the task board. While a vertical scrollbar is illustrated, a horizontal scrollbar may be used either alone or in conjunction with the vertical scrollbar. In addition, other scrolling means, such as a touch or swipe on a touch screen, may be used as well.

The application icons 514 in the task board 510 can be organized using a desired organizational method. For instance, the icons may be displayed based on the order in which a web application is launched, alphabetically based on a name of the web application, ordered by the amount of time that a web application is used relative to other opened applications, ordered based on when the web application was created, and so forth. In one embodiment, the settings for the task board organization can be made using the menu bar 504 of the Power Bar resident desktop application 508. The Power Bar resident desktop application 508 can also be configured to enable multiple copies of the same file or application to be opened. Since the copies are opened at different times, they are referred to as different temporal instances of a web application. The task board 510 shows two application icons named "EDIT Jon(1)" and "EDIT Jon(2)". By opening two or more windows of the same application, the user can experiment with settings and have the ability of multiple level roll backs, even when the application does not support rollback. For instance, the first window (EDIT Jon(1)) may be left untouched with the original settings of a managed object. The second window (EDIT Jon(2)) can contain new settings that the user is trying out. At any time, the user can apply the original settings again from the first window if the new settings did not work as desired.

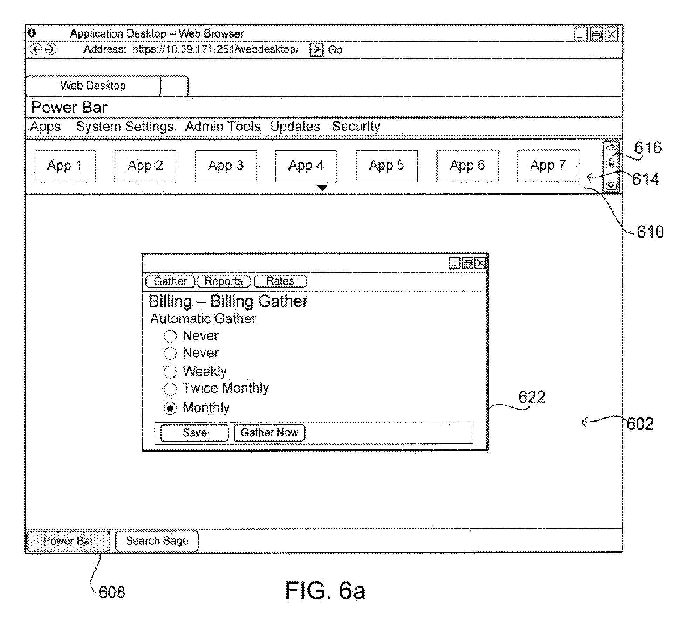

In one embodiment, the task board 610 can be implemented as a scrollable window showing a single row of application icons 614, as shown in the example illustration of Figure 6a. The scrollable window can include a scrollbar 616 that enables the user to view adjacent rows of icons by clicking or selecting up or down on the scrollbar. Implementing the task board as a single row enables the work area 602 to be maximized for viewing open web applications 622 in the Power Bar resident desktop application 608.

In one embodiment, the task board 610 can be implemented in each resident desktop application to enable a user to control a display of web applications operating in the resident desktop application.

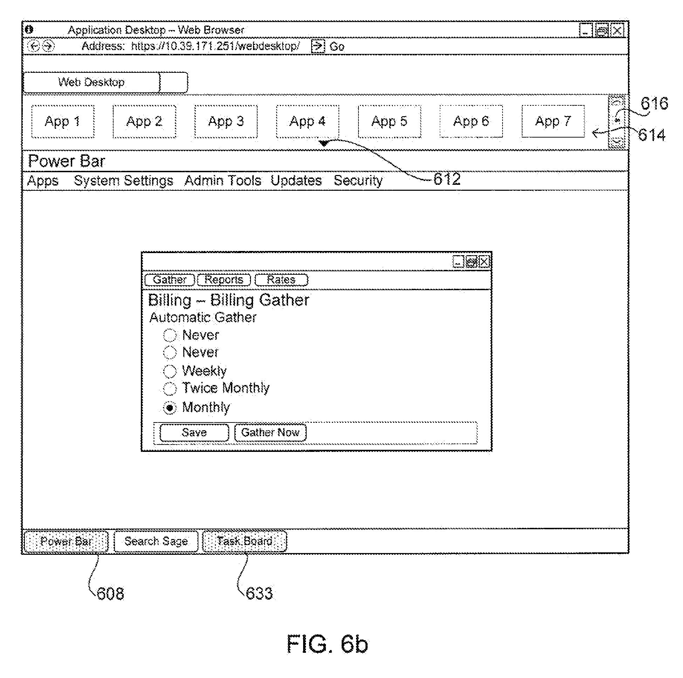

Alternatively, in another embodiment, the task board 633 can be a resident desktop application itself, as shown in the example illustration of Figure 6b. In this embodiment, the task board can be located adjacent to the maximized resident desktop application. For instance, Figure 6b shows the task board resident desktop application 633 located above the Power Bar resident desktop application 608. The task board may also be located below, or to one side of the maximized resident desktop application(s).

The task board resident desktop application 633 may be resized by the user. For instance, the user can resize the task board resident desktop application by manually resizing the window by dragging a bottom edge up or down using an indicator such as a mouse pointer. The user may also resize the task board using the active region 612, as was previously discussed. When the task board resident desktop application is resized, the maximized resident desktop application(s) can also be resized to enable the task board resident desktop application to adjoin the maximized resident desktop application(s). The task board resident desktop application can include a scrollbar 616 to enable a user to scroll through rows of application icons 614 associated with open web applications.

In one embodiment, the task board resident desktop application 633 can be configured to show only the web applications that are operating in one or more resident desktop application(s) that are currently maximized. For instance, when the Power Bar resident desktop application 608 has been maximized, the task board resident desktop application can display the application icons associated with open web applications operating in the Power Bar resident desktop application.

In another embodiment, the task board resident desktop application 633 can be configured to show an application icon for every web application that has been opened in each resident desktop application that is operating on the web desktop. In this embodiment, each application icon can be displayed to identify which resident desktop application it is operating in. For instance, the application icons may be color coded, include a text display, or otherwise be encoded to contain information showing in which resident desktop application the web application is operating.

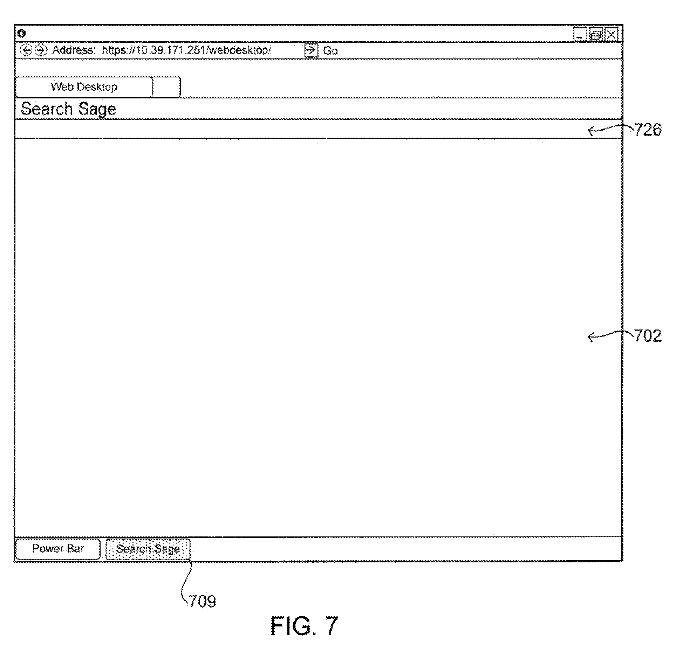

Figure 7 illustrates one example of the Search Sage resident desktop application 709. The Search Sage resident desktop application is a persistent application that will only terminate when the web desktop is closed. The Search Sage resident desktop application provides the user an additional way of finding and opening a desired web application. In the Search Sage resident desktop application, a user can find a desired web application by typing key words into a text input box 726. In response to the text entered into the text input box, the Search Sage resident desktop application can provide a list of web applications associated with the text. A user can then select a desired web application to launch it in the work area 702.

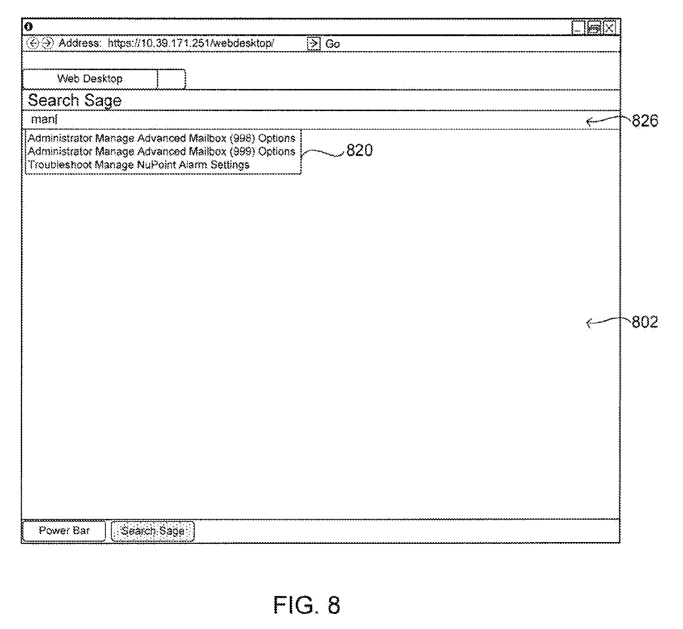

For instance, Figure 8 provides an example in which a user may desire to manage a mailbox. The user can enter manage into the text input box 826. As the user begins to type, and enters the letters "man" in the text input box, the Search Sage can identify web applications relating to the letters in a selection box 820. In this example, the related web applications include an Administrator Manage Advanced Mailbox application for users 998 and 999. When a user selects one of the web applications listed in the selection box then the text in the text input box 826 is completed to include the entire name of the web application. The web application can then be launched in the work area 802.

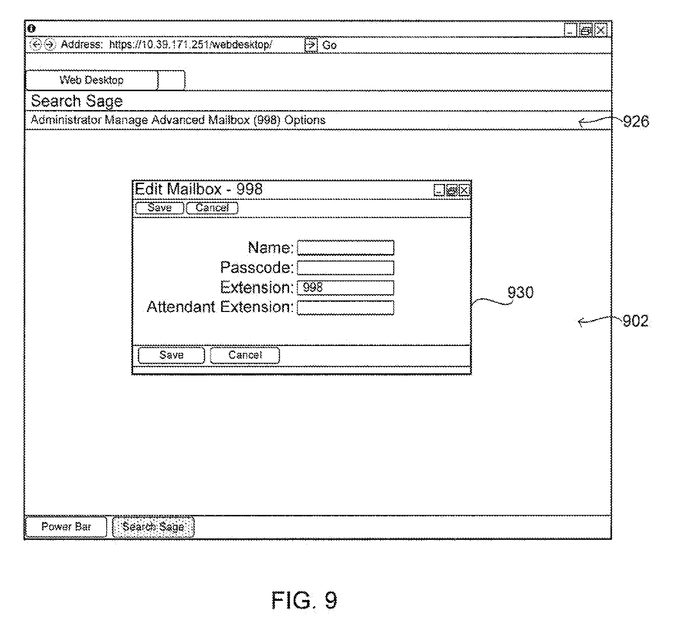

Figure 9 provides an example illustration of the associated web application 930 that has been launched and displayed in the work area 902. The text input box 926 shows the entire name of the web application. A user can manage Mailbox 998 as desired and then close the web application. The Search Sage resident desktop application can be configured to operate multiple web applications and display multiple windows simultaneously, as was discussed previously with respect to the Power Bar resident desktop application. The task board can be used to enable a user to control a display of the windows associated with the multiple web applications that can be opened within the Search Sage resident desktop application.

In another embodiment the web desktop can be configured to operate on a mobile computing device such as a smart phone or a tablet. A mobile computing device often has significant differences from a desktop computing device, such as a smaller screen size, the need for wireless communication, and a dependence on battery power to operate. In addition, many forms of mobile computing use touch screens that take advantage of different types of graphical interfacing.

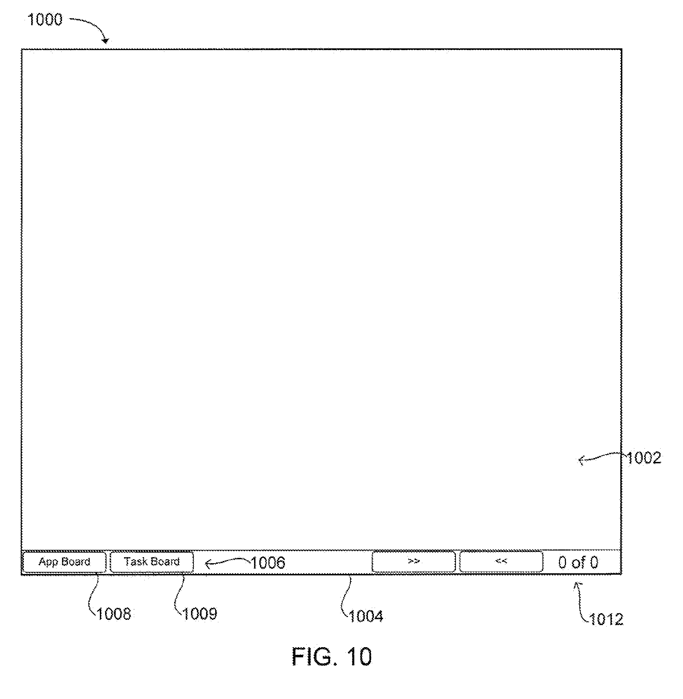

Figure 10 provides an illustration of one example embodiment of a web browser operating environment 1000 for a mobile computing device. The web browser operating environment comprises a work area 1002 and a resident application bar 1004. The simplified design of the web browser operating environment can reduce the amount of power used in processing graphically intensive displays, while maximizing the screen area available to display active web applications. The larger available screen area can enable different forms of user interface, such as touch screens, to be used to interact with the web operating environment and web applications operating within the web operating environment.

In one embodiment, the resident application bar 1004 is used only to display resident web icons 1006 for resident web applications that are configured to operate persistently with the web operating environment 1000. In other words, the resident web applications are launched at the same time as the web operating environment and can only be terminated when the web operating environment is terminated.

Each resident web icon 1006 can be limited in functionality. While typical application icons can be used to accomplish functions such as maximizing, minimizing, moving, and resizing a window associated with an icon's application, the resident web icons can be limited in functionality to the operations of maximizing or minimizing the resident web application. Thus, each resident web application can only be maximized or minimized, thereby enabling only a single resident web application to be viewed at any one time using the web operating environment 1000.

One resident web application that can be launched with the web operating environment 1000 is the Application Board resident web application 1008. The Application Board resident web application is a web application configured as an application launcher with active task management. Another resident web application that can be launched with the web operating environment is the Task Board resident web application 1009. The Task Board resident web application enables a user to determine which web applications are actively operating in the web operating environment on a mobile computing device and select a desired active web application to view in the work area 1002.

The resident web icons 1006 for the resident web applications 1008, 1009 can be displayed on the resident application bar 1004 in any order. Each icon can act as a toggle switch, enabling the associated resident web application to be maximized or minimized by selecting the resident web icon. In the present application, resident web icons with no background represent a minimized application, while resident web icons with a dotted background represent a maximized application. This is done for illustrative reasons only and is not intended to be limiting.

The Application Board resident web application 1008 is a web application launcher that enables a user to launch multiple web applications in individual windows within the web operating environment 1000 to be displayed in the work area 1002. As with desktop applications, a web application for a mobile computing device is a computer software application, such as a Java applet that can be hosted in a web browser or similar type of environment. A web application may be written in a language that is supported by a web browser. Popular client side languages include scripting languages such as JavaScript and VBScript. Server side languages, such as PERL and PHP, may also be used. The web application is typically reliant on a common web browser to render the application executable. Any type of common web browser that supports the web application language may be used.

In one embodiment, a web application operating in the web operating environment 1000 can be configured to operate as a client side application, wherein substantially all of the computing is accomplished at the mobile computing device. In another embodiment, a web application operating in the web operating environment can be configured to operate as a server side application, wherein a substantial amount of the computing power to run the web application can be accomplished at a server in communication with the mobile computing device. The amount of computing accomplished at the client side or the server side can be a tradeoff between the performance, complexity, and security of the web application operating on the mobile computing device. Server side web applications require less processing power at the mobile computing device, while using more power to wirelessly communicate with the server. Conversely, client side applications use more processing power at the mobile computing device, while reducing the amount of power used to transmit and receive with a wireless communication device that is in communication with the server. A decision as to whether a web application should be a client side application or a server side application is dependent on the type of application, the security needs, and the system requirements of the mobile computing device, the server, and the wireless communication network. The resident application bar 1004 can include a counter 1012 that shows the number of web applications that are launched in the current web operating environment 1000.

In the illustrated example embodiment, the counter can show a total number of applications that are operating in the web environment as well as the specific number that is assigned to the web application that is currently displayed in the work area 1002. The counter may not include the resident desktop applications that are also operating. The counter will be discussed more fully below.

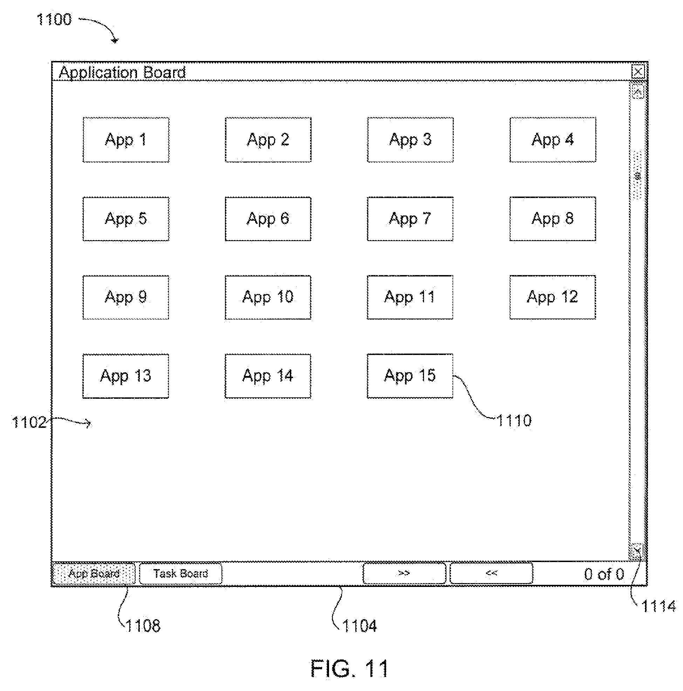

Figure 11 illustrates one example of the application board resident web application 1108. The resident web application can be maximized for display in the work area 1102 using a selection device to activate the icon 1106, such as a touch device (i.e. a finger or stylus) or an electronic device such as a trackball, mouse, or the like to use an icon to select the associated icon in the resident application bar 1104 to maximize the application board web application. The application board web application can display icons 1110 for web applications for a selected system operating in the web operating environment 1100. Each system can have different web applications.

In the example in Figure 11, there are 15 different web icons 1110. Each web icon is associated with a web application that can be launched in the web operating environment 1100. Multiple web applications can operate simultaneously within the web operating environment. When a user selects a web icon in the application board resident web application 1108 then the application can load within the web browser.

The web application may be available for loading locally on the mobile computing device. Alternatively, the web application can be loaded from a remote server through the use of a uniform resource locator (URL). In one embodiment, each web application can include two or more variants of the URL, one variant for a web application configured to operate on a full sized desktop web application and another variant for the same web application that is configured to operate on a mobile device. The web applications configured to operate on a mobile device can use the same code base as is used to support web applications designed to operate on desktop computing environments.

In one embodiment, the decision as to whether to load the full sized desktop web application or the mobile web application is determined based on the screen resolution (i.e. screen size) of the device on which the web application will be loaded. Mobile computing devices, such as smart phones and tablets, often have a lower screen resolution than desktop computers. For instance, a smart phone may have a 3.5 inch display with a screen resolution of 960 x 640 pixels. A tablet with a 10 inch display may have a screen resolution of 1024 x 768 pixels. A lower end smart phone may have a screen resolution of 800 pixels by 480 pixels. The web application configured to operate on a mobile computing device can have be designed with a lower resolution, such as 800 pixels by 480 pixels, thereby enabling the application to operate on all smaller screens. The desktop web application can have a higher resolution to take advantage of larger screens. Mobile devices can be configured to automatically load the URL designed for a mobile device.

In one embodiment, the web applications designed to operate on a mobile computing device can only be maximized and minimized to allow each application to use a maximum amount of screen space to be viewed in the work area 1102. The application board resident web application can include a scroll bar 1114 that can be used to scroll through the available applications. The web icons can be sized to enable a user to view and distinguish each icon. The web icons can be spaced to allow them to be selected while minimizing accidental selections of adjacent icons. For instance, the icons may be spaced such that a typical human finger can be used to select an icon to activate the associated web application.

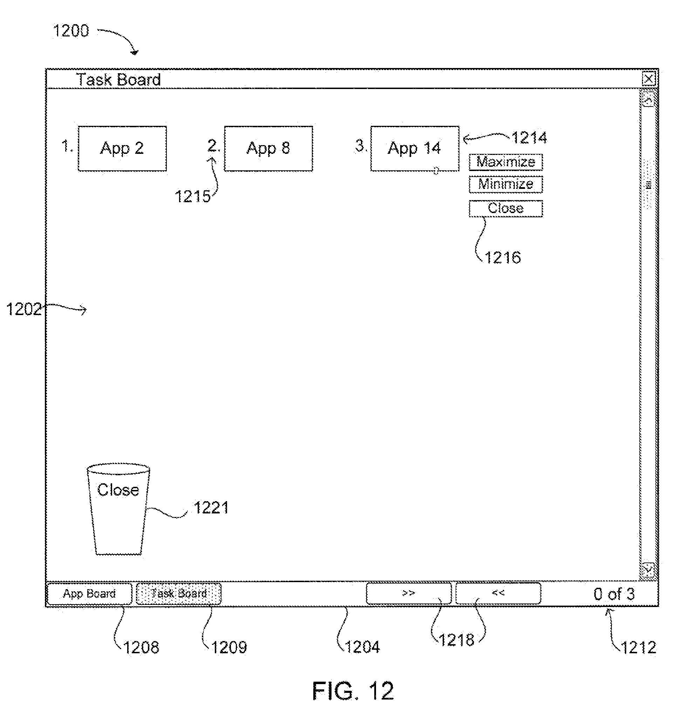

Figure 12 shows one example of the task board resident web application 1209. The task board web application can be used to control web applications that are actively operating in the web operating environment 1200. While the application board resident web application 1208 can be used to activate selected web applications, the task board can be used to maximize, minimize, and/or close a selected application. In one embodiment, an active icon 1214 can be displayed in the work area 1202 for each actively operating web application that was launched in the application board resident web application. Each icon may be assigned a number 1215 that correlates to the number that will be displayed in the counter 1212 when the application is displayed in the work area 1202. The number assigned to the web application may correlate with the order in which a web application was opened. Alternatively, different types of numbering schemes may be used such as assigning a number based on the alphabetic arrangement of web application names, a predetermined arrangement, an amount of use, a user selectable number value, and so forth.

In the example in Figure 12, the active icons 1214 are displayed based on the order in which the applications were opened. Application 2 is assigned a "1". When Application 2 is maximized for viewing in the work area 1202, the counter 1212 can display a 1. When application 8 is maximized, the counter can display a "2", and when application 14 is displayed, the counter can display a "3". It is noted that the total number of applications operating in this example, 3, is displayed in the counter.

When an active icon 1214 is selected in the task board resident application, a graphical interface, such as the example graphical interface 1216, that is associated with the active icon, can be displayed. The graphical interface enables a user to take a desired action on the web application, such as maximizing the application for viewing in the work area 1202, minimizing the application, or closing the application.

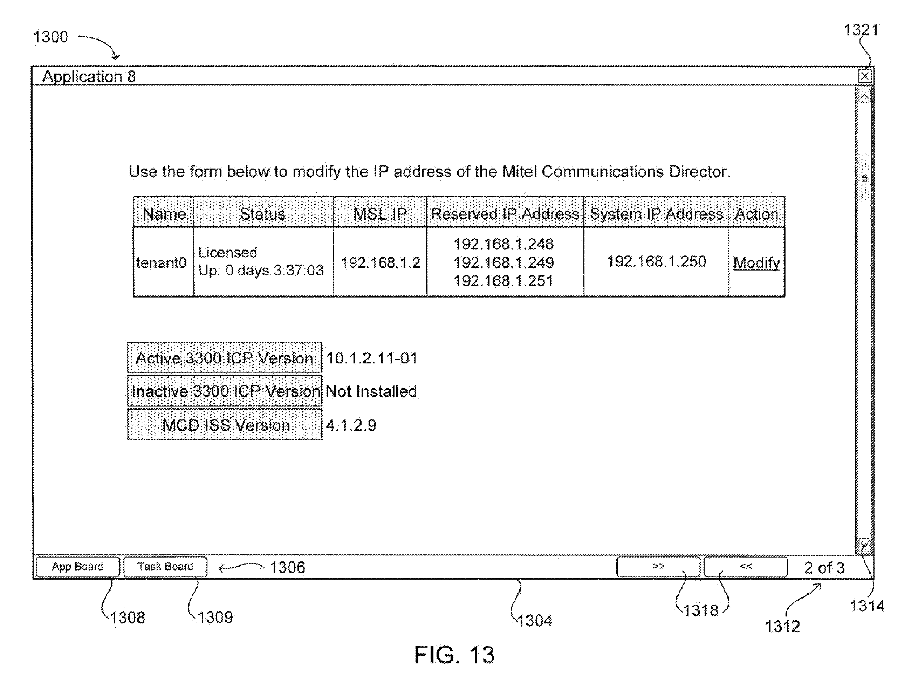

In embodiments used with very small screens, such as smart phones, the graphical interface may use too much screen space. Accordingly, maximizing a web application can be accomplished by selecting an active icon 1214, such as pressing the active icon with a finger. The web application can then be closed directly within the maximized web application. This will be discussed more fully in Figure 13.

In another embodiment, the active icon 1214 associated with a launched web application can be dragged and dropped by a user to a selected area on the screen. For instance, multiple active icons can be dragged to a "close" icon 1221 to enable a user to close multiple launched web applications within the task board resident web application 1209.

As web applications are launched or closed, the values on the counter 1212 will be updated accordingly. The number assigned to a launched web application can be resorted and reassigned once an application is closed. For example, if Application 2 is closed then Application 8 will have the value "1" assigned in the counter and Application 14 will have the value "2" assigned in the counter.

The resident application bar 1204 can include an active window scroll interface 1218 that is configured to allow a user to scroll through active web applications that are operating within the web operating environment 1200. For instance, the scroll interface 1218 can be used to scroll through active web applications in the order they are arranged and numbered in the task board resident desktop application 1209. A user can use the active window scroll interface to view a maximized version of the application in the work area 1202. In one embodiment, a user can select an active icon 1214 and drag it to a new location to reorder the active icons to allow the applications to appear in a more convenient order. For instance, two applications that are used a lot may be repositioned to in adjacent locations on the task board to enable the user to scroll back and forth between them using the active window scroll interface. While buttons are shown as the graphical representation of the active window scroll interface, other types of graphical representations can also be used, such as a wheel, a dial, a three dimensional representation of a ball, and so forth, as can be appreciated. In addition, a user may scroll between active web applications using touch controls, such as swiping the screen to scroll through the active applications.

Figure 13 shows an example illustration of Application 8, as shown in the application board resident web application in Figure 12 and the task board resident web application in Figure 11. The counter 1312 on the resident application bar 1304 shows that Application 8 is the 2nd of 3 web applications that are currently launched in the web operating environment 1300. Application 8 may be a substantially client side application. For instance, the graphical interface in the application may be rendered by software operating on the mobile computing device. Data displayed in the graphical interface may be based on data that is locally available at the mobile computing device. Alternatively, Application 8 may be configured to send a query from the mobile computing device via a wireless communication link and obtain the data from a server or other type of remote computing device.

The wireless communication link may be a local link, such as a Bluetooth® link or an Institute of Electrical and Electronics Engineers (IEEE) 802.11 based WiFi connection to a wireless router connected with a local area network (LAN) or other type of computer network. Alternatively, the wireless communication link may be a link to a cellular type wireless network that connects the mobile computing device to the internet via a wireless standard such as the IEEE 802.16 standard, commonly referred to as WiMax, the third generation partnership project (3GPP) long term evolution (LTE) standard, or another type of wireless standard used to communicate between wireless devices or to a wireless router connected to a wired connection of a network.

Each web application may include a scrollbar 1314 used to scroll beyond the visible portion of the screen. While a vertical scrollbar is shown in the example of Figure 13, horizontal scroll bars may also be used. A user can also scroll about a screen by touching and dragging the screen, as can be appreciated. A user can close Application 8 by selecting the "X" box 1321 in the upper right corner in this example.

In the example of Figure 13, a user can use the active window scroll interface 1318 to scroll to the third application (Application 14 according to the Task Board in Figure 12) or to scroll to the first application (Application 2). The application board resident web application 1308 can be maximized by selecting the resident web icon 1306 on the resident application bar 1304 to select a new application to load. Alternatively, a user can activate the task board resident web application 1309 to view another operating web application or close one or more selected web applications.

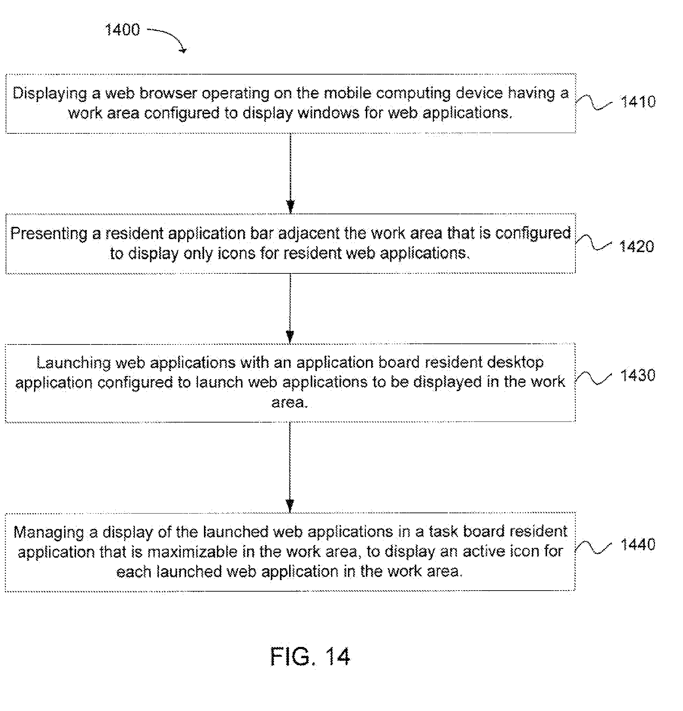

In another embodiment, a method for operating web applications in a web browser operating environment on a mobile computing device is disclosed, as depicted in the flow chart of Figure 14. The method comprises displaying 1410 a web browser operating on the mobile computing device having a work area configured to display windows for web applications.

The method 1400 further comprises presenting 1420 presenting a resident application bar adjacent the work area that is configured to display only icons for resident web applications. Web applications can be launched 1430 with an application board resident desktop application configured to launch web applications to be displayed in the work area. A display of the launched web applications can be managed 1440 in a task board resident application that is maximizable in the work area to display an active icon for each launched web application operating in the web browser operating environment.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

It should be understood that many of the functional units described in this specification have been labeled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Unless features of "one embodiment" are inconsistent with features of other embodiments, the term "one embodiment" shall be construed to be a disclosure of the associated features in conjunction with all other features that are consistent therewith.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as defacto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

Various techniques, or certain aspects or portions thereof, may take the form of program code (i.e., instructions) embodied in tangible media, such as floppy diskettes, CD-ROMs, hard drives, or any other machine-readable storage medium wherein, when the program code is loaded into and executed by a machine, such as a computer, the machine becomes an apparatus for practicing the various techniques. In the case of program code execution on programmable computers, the computing device may include a processor, a storage medium readable by the processor (including volatile and non-volatile memory and/or storage elements), at least one input device, and at least one output device. One or more programs that may implement or utilize the various techniques described herein may use an application programming interface (API), reusable controls, and the like. Such programs may be implemented in a high level procedural or object oriented programming language to communicate with a computer system. However, the program(s) may be implemented in assembly or machine language, if desired. In any case, the language may be a compiled or interpreted language, and combined with hardware implementations.

While the forgoing examples are illustrative of the principles of the present invention in one or more particular applications, it will be apparent to those skilled in the art that numerous modifications in form, usage and details of implementation can be made without the exercise of inventive faculty, and without departing from the principles and concepts of the invention. Accordingly, it is not intended that the invention be limited, except as by the claims set forth below.

## Claims

1. A web browser operating environment for a mobile computing device, comprising:
a work area configured to display application windows in a web browser operating on a mobile computing device;
a resident application bar displayed adjacent the work area and configured to display only icons for resident web applications;
an application board resident application configured to be selected on the resident application bar to display in the work area icons that are operable as shortcuts to launch web applications to be displayed in the work area; and
a task board resident application configured to be selected on the resident application bar to display in the work area a web application icon for each launched web application to allow a display of the launched web applications to be managed.

2. The web browser operating environment of claim 1, wherein each resident web application is persistent and can only be terminated when the web browser operating environment is terminated.

3. The web browser operating environment of claim 1 or claim 2, further comprising a search sage resident web application configured to search for available web applications that are operable to launch in the web browser operating environment.

4. The web browser operating environment of any of claims 1 to 3, wherein the task board is configured to be displayed in a closed position comprising a thin bar located at a selected edge of the work area with an active region that can be selected to open the task board to display a two dimensional window.

5. The web browser operating environment of any of claims 1 to 4, wherein the task board includes a vertical scroll bar in a two dimensional window to allow a user to scroll vertically to view additional web application icons related to active web applications.

6. A web browser operating environment for a mobile computing device, comprising:
a work area configured to display application windows in a web browser operating on a mobile computing device;
a resident application bar displayed adjacent the work area and configured to display only icons for resident desktop applications, wherein each resident desktop application is persistent and can only be terminated when the desktop environment is terminated;
an application board resident application configured to be selected on the resident application bar to display in the work area icons that are operable as shortcuts to launch web applications to be displayed in the work area; and
a task board resident application configured to be selected on the resident application bar to display in the work area a web application icon for each launched web application to allow a display of the launched web applications to be managed.

7. The web browser operating environment of claim 6, further comprising an active window scroll interface located on the resident application bar and configured to allow a user to scroll through active web applications.

8. The web browser operating environment of claim 6, wherein the task board includes a vertical scroll bar to allow a user to scroll vertically to view additional web application icons related to active web applications.

9. The web browser operating environment of claim 1 or claim 6, wherein each resident application bar icon for a selected resident desktop application can be used only to maximize and minimize a window in the work area that is associated with the resident desktop or web application.

10. The web browser operating environment of claim 1, claim 6 or claim 9, wherein each web application icon in the task board is configured to allow a user to select at least one action for a window associated with a web application, the at least one action selected from the group consisting of maximizing the window, minimizing the window, and closing the window.

11. The web browser operating environment of any of claims 1, 9 and 10, wherein the application board resident desktop application is configured to launch multiple temporal instances of a single web application.

12. The web browser operating environment of any of claims 1 and 9 to 11, wherein the task board is configured to operate as one of a separate resident desktop application and within at least one resident desktop application operating in the web based desktop environment.

13. A method for operating web applications in a web browser operating environment on a mobile computing device, comprising:
displaying a web browser operating on the mobile computing device having a work area configured to display windows for web applications;
presenting a resident application bar adjacent the work area that is configured to display only icons for resident web applications;
launching web applications with an application board resident desktop application configured to launch web applications to be displayed in the work area; and
managing a display of the launched web applications in a task board resident application that is maximizable in the work area, to display an active icon for each launched web application in the work area.

14. The method of claim 13, further comprising scrolling through the launched web applications using an active window scroll interface located on the resident application bar.

15. The method of claim 13, further comprising communicating with a remote server to provide at least one of computer processing and data for the web applications operating in the web browser operating environment.
